# EUROPEAN PATENT APPLICATION

(11) **EP 4 604 371 A1**
(43) Date of publication of application: **20.08.2025**
(21) Application number: 23877317.0
(22) Date of filing: 11.10.2023
(51) Int. Cl.: H02K 15/02

(54) **STACKED BODY MANUFACTURING DEVICE, AND STACKED BODY MANUFACTURING METHOD**

(30) Priority: 13.10.2022 JP 2022164918
(71) Applicant: NHK Spring Co., Ltd., Kanagawa 236-0004 (JP)
(72) Inventor: ITO, Keiichi, Yokohama-shi, Kanagawa 236-0004 (JP); KAMEDA, Yohei, Yokohama-shi, Kanagawa 236-0004 (JP); WATANABE, Koji, Tatsuno-Shi, Hyogo 6795165 (JP)
(74) Representative: DREISS Patentanwälte PartG mbB
(86) International application number: PCT/JP2023/036915
(87) International publication number: WO 2024/080316

(57) **Abstract**

There is provided a layered body manufacturing apparatus, including: a supply mechanism that supplies sheet-shaped metal pieces, including a sheet-shaped metal piece having a part of at least one surface to which an adhesive is applied; and an annular squeezer having a conveyance passage in which the metal pieces supplied from the supply mechanism are sequentially layered and conveyed. The squeezer includes: a first side pressure application region that is positioned at an end portion at a side upstream in a conveying direction of the metal pieces and that pressurizes and supports, with a predetermined pressure, at least a part of a side surface of each of the metal pieces supplied from the supply mechanism, a second side pressure application region that is positioned at an end portion at a side downstream in the conveying direction and that pressurizes and supports, with a predetermined pressure, the at least a part of a side surface of each of the metal pieces conveyed in the squeezer, and a middle region that is positioned between the first side pressure application region and that the second side pressure application region in the conveying direction and has a gap between the middle region and the metal pieces conveyed in the squeezer.

## Description

### Technical Field

The present disclosure relates to a layered body manufacturing apparatus and a method for manufacturing a layered body.

### Background Art

In order to obtain motor cores (specifically, rotor cores or stator cores) used for motors mounted on a rotating electrical machine such as an electric vehicle, manufacturing of layered bodies in which a plurality of punched sheet-shaped metal pieces are layered is performed. As such layered bodies, a layered body formed by bonding metal pieces to each other with an adhesive is known (see, for example, Japanese Patent Application Laid-Open (JP-A) No. 2005-132003).

JP-A No. 2005-132003 describes that metal pieces are punched out from sheets on which an adhesive is applied, by using a punch and a die, the punched metal pieces are layered, and pressure is applied thereto from a side perimeter using a guide piece such that the metal pieces are aligned and moved while the metal pieces are held in the guide piece. In addition, JP-A No. 2005-132003 also describes that the metal pieces are heated when the metal pieces are aligned and moved in the guide piece such that the applied adhesive is melted to bond the metal pieces.

### SUMMARY OF INVENTION

### Technical Problem

In a case in which the metal pieces included in the layered body are to be bonded to each other, it is necessary to press the metal pieces with a predetermined force in a layering direction in which the metal pieces are layered so that bonding surfaces are reliably brought into close contact with each other. In a case in which the metal pieces are sequentially layered to be bonded while being aligned and moved as in JP-A No. 2005-132003, the metal pieces may be pushed in the guide piece with a relatively high pressure by using the punch such that pressing of the metal pieces may be performed in the layering direction thereof. However, the guide piece described in JP-A No. 2005-132003 pressurizes (hereinafter, to pressurize is also referred to as "to apply a side pressure") and supports the entire side perimeter of the plurality of metal pieces being aligned and moved. Therefore, a load in the layering direction which is applied by the punch is distributed and applied to all the plurality of metal pieces aligned and moved by the guide piece. In this case, the load in the layering direction which is applied to one metal piece, particularly, one metal piece before or during bonding, is less likely to be able to be increased, and there is a possibility that bonding defects will be produced between the metal pieces.

In view of the above-described problems, an object of the disclosure is to provide a layered body manufacturing apparatus and a method for manufacturing a layered body in which bonding defects of the metal pieces are reduced.

### Solution to Problem

In order to achieve the object described above, there is provided a layered body manufacturing apparatus according to a first aspect of the disclosure including: a supply mechanism that supplies sheet-shaped metal pieces including a sheet-shaped metal piece having a part of at least one surface to which an adhesive is applied; and a squeezer having a conveyance passage in which the metal pieces supplied from the supply mechanism are sequentially layered and conveyed. The squeezer includes a first side pressure application region which is positioned at an end portion on a side upstream in a conveying direction of the metal pieces and pressurizes and supports, with a predetermined pressure, at least a part of a side surface of each of the metal pieces supplied from the supply mechanism, a second side pressure application region which is positioned at an end portion on a side downstream in the conveying direction and pressurizes and supports, with a predetermined pressure, at least a part of a side surface of each of the metal pieces conveyed in the squeezer, and a middle region which is positioned between the first side pressure application region and the second side pressure application region in the conveying direction and has a gap between the middle region and the metal pieces conveyed in the squeezer.

In the layered body manufacturing apparatus as described above, the squeezer includes the middle region which does not apply a side pressure to the metal pieces such that a load in a layering direction applied to the metal pieces conveyed in the conveyance passage can be increased. This enables the metal pieces to be brought into closer contact with each other, and enables bonding defects to be reduced.

The layered body manufacturing apparatus of a second aspect of the disclosure according to the layered body manufacturing apparatus of the first aspect of the disclosure may further include a back pressure device that supports the metal pieces conveyed in the conveyance passage to pressurize the metal pieces from the side downstream in the conveying direction toward the side upstream in the conveying direction.

In the layered body manufacturing apparatus as described above, since a load in the layering direction can be constantly applied to the metal pieces conveyed in the conveyance passage from the back pressure device, a closer contact state of the metal pieces can be easily maintained.

In the layered body manufacturing apparatus of a third aspect of the disclosure according to the layered body manufacturing apparatus of the first or second aspect of the disclosure, the supply mechanism may include a punching mechanism having a punch and a die which punch out the metal pieces having a predetermined shape from strip-shaped sheets, and the die may be connected to an end portion of the squeezer on the side upstream in the conveying direction.

In the layered body manufacturing apparatus as described above, punching and bonding of the metal pieces can be continuously performed.

In the layered body manufacturing apparatus of a fourth aspect of the disclosure according to the layered body manufacturing apparatus of the first or second aspect of the disclosure, the supply mechanism may include a metal piece conveyance passage in which the metal pieces are conveyed, a press machine which pushes the metal pieces conveyed in the metal piece conveyance passage to an end portion of the squeezer on the side upstream in the conveying direction, and an adhesive applying device which applies an adhesive to a part of at least one surface of at least some of the metal pieces conveyed in the metal piece conveyance passage.

In the layered body manufacturing apparatus as described above, metal pieces punched by an existing punching device can be bonded to form a layered body.

There is provided a method for manufacturing a layered body according to a fifth aspect of the disclosure, including: a step of supplying sheet-shaped metal pieces including a sheet-shaped metal piece having a part of at least one surface, to which an adhesive is applied, to an end portion on a side upstream in a conveying direction of the metal pieces in a squeezer including a conveyance passage in which the metal pieces are sequentially layered and conveyed, the squeezer including a first side pressure application region which is positioned at an end portion on a side upstream in the conveying direction and pressurizes and supports, with a predetermined pressure, at least a part of a side surface of each of the metal pieces, a second side pressure application region which is positioned at an end portion on a side downstream in the conveying direction and pressurizes and supports, with a predetermined pressure, at least a part of a side surface of each of the metal pieces conveyed in the squeezer, and a middle region which is positioned between the first side pressure application region and the second side pressure application region in the conveying direction and has a gap between the middle region and the metal pieces conveyed in the squeezer; a step of layering and bonding the metal pieces in the conveyance passage and conveying the metal pieces in the conveying direction; and a step of unloading, from an end portion of the squeezer on the side downstream in the conveying direction, a layered body in which a plurality of the metal pieces are bonded.

In the method for manufacturing a layered body as described above, the layered body is manufactured using the squeezer including the middle region which does not apply the side pressure to the metal pieces such that a large load can be applied in the layering direction when the metal pieces are conveyed in the squeezer. This enables the metal pieces to be brought into closer contact with each other, and enables bonding defects to be reduced.

### Advantageous Effects of Invention

According to a layered body manufacturing apparatus and a method for manufacturing a layered body of the disclosure, bonding defects of metal pieces can be reduced.

### BRIEF DESCRIPTION OF DRAWINGS

Fig. 1 is a schematic illustrative view showing an example of a layered body manufacturing apparatus according to an embodiment of the disclosure.
Fig. 2 is an enlarged view showing a part of a squeezer of the layered body manufacturing apparatus of Fig. 1 in an enlarged manner.
Fig. 3 is a cross-sectional view taken along line A-A in Fig. 1.
Fig. 4 is a cross-sectional view taken along line B-B in Fig. 1.
Fig. 5A is an illustrative view of operation in a case in which an example of a method for manufacturing a layered body according to the other embodiment of the disclosure is implemented.
Fig. 5B is an illustrative view of operation in a case in which an example of the method for manufacturing a layered body according to the other embodiment of the disclosure is implemented.
Fig. 5C is an illustrative view of operation in a case in which an example of the method for manufacturing a layered body according to the other embodiment of the disclosure is implemented.
Fig. 6 is a schematic illustrative view showing an example of a layered body manufacturing apparatus according to a modification example of the disclosure.

### DESCRIPTION OF EMBODIMENTS

This application is based on Japanese Patent Application No. 2022-164918 filed on October 13, 2022 in Japan, the contents of which are incorporated as the contents of this application in a part thereof.

The disclosure will be more fully understood by the following detailed description. The broader scope of application of the present application will be apparent from the following detailed description. However, the detailed descriptions and the specific illustrative examples are preferred embodiments of the disclosure and are described for purposes of description only. From these detailed descriptions, various changes and modifications will be apparent to those skilled in the art within the spirit and scope of the disclosure.

The applicant does not intend to present any one of the described embodiments to the public, and among the disclosed modifications and alternatives, modifications and alternatives that may not be included in the scope of the claims are also parts of the invention under the doctrine of equivalents.

Hereinafter, embodiments for carrying out the disclosure will be described with reference to the drawings. In the following description, a range necessary for the description for achieving the object of the disclosure will be schematically described, a range necessary for the description of a corresponding part of the disclosure will be mainly described, and a part for which description is omitted will depend on known techniques. Members that are identical or correspond to each other in the drawings are denoted by the same or similar reference numerals, and redundant descriptions thereof are omitted. In a case where a plurality of members that are identical or correspond to each other in the drawings are included, only some of the members may be denoted by reference numerals in order to make the drawings easier to see.

### <Layered Body Manufacturing Apparatus>

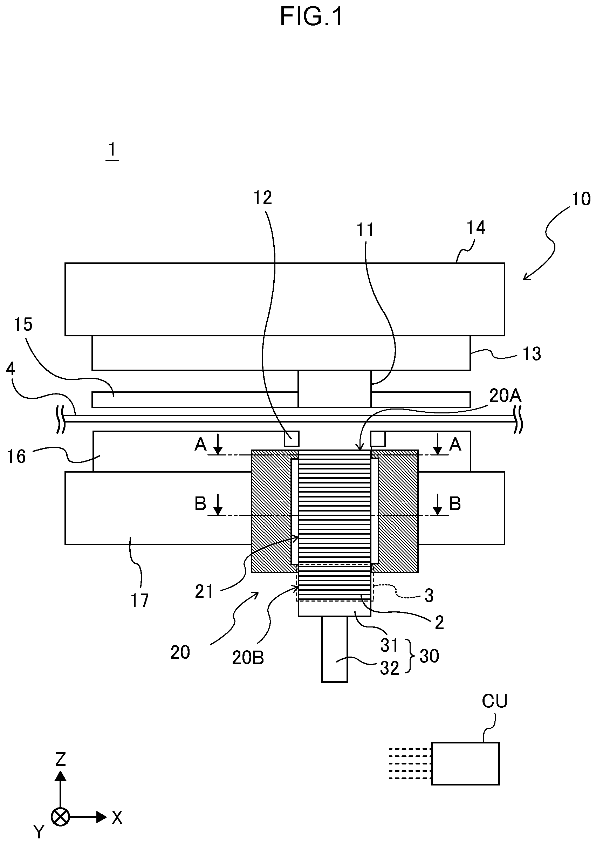

Fig. 1 is a schematic illustrative view showing an example of a layered body manufacturing apparatus according to an embodiment of the disclosure. In Fig. 1, in order to make a structure easier to understand, a part (specifically, mainly a part of a squeezer 20 and a part of a die 12) of the layered body manufacturing apparatus 1 is shown on a cross section. As shown in Fig. 1, the layered body manufacturing apparatus 1 according to the embodiment includes a punching mechanism 10 as an example of a supply mechanism that supplies metal pieces 2, and a squeezer 20 that sequentially layers and conveys the metal pieces 2 supplied from the punching mechanism 10. In the following description, it is assumed that a direction represented by an arrow X shown in Fig. 1 is a left-right direction, similarly, a direction represented by an arrow Y is a front-rear direction, and a direction represented by an arrow Z is an up-down direction.

A layered body 3 manufactured by the layered body manufacturing apparatus 1 according to the embodiment is produced by layering a plurality of metal pieces 2. The layered body 3 may be included in an iron core included in a rotating electrical machine such as a motor or a generator, more specifically, at least a part of a stator core and a rotor core. The stator core and the rotor core referred to herein may include both a split type and a non-split type. In the following description, a part of the stator core included in an internal rotor motor is exemplified as the layered body, but the layered body is not limited thereto.

The punching mechanism 10 may be a mechanism for punching the metal piece 2 having a predetermined shape from a strip-shaped sheet-shaped metal 4. As shown in Fig. 1, the punching mechanism 10 can include at least a punch 11 and a die 12.

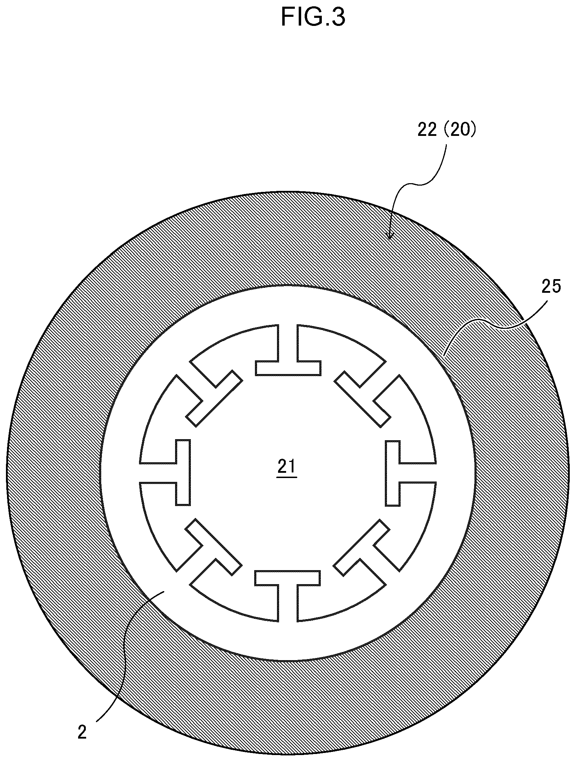

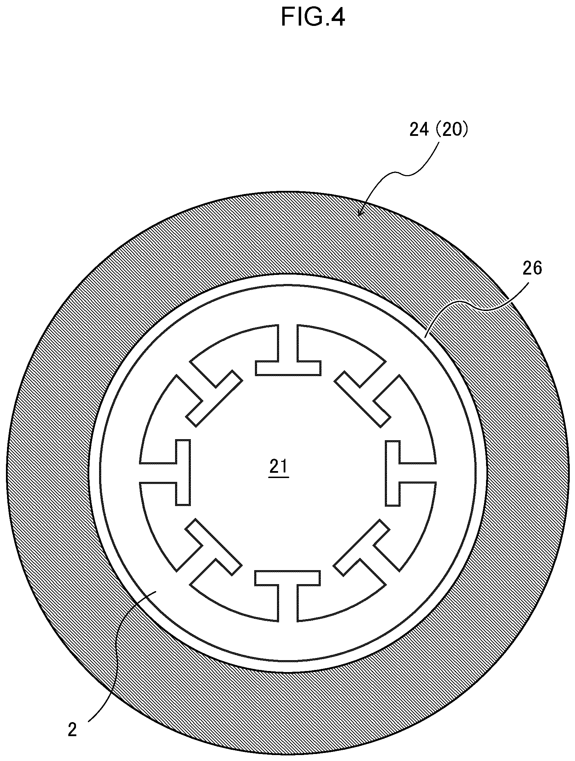

The metal piece 2 punched by the punching mechanism 10 is a part of the layered body included in the stator core, and may be a substantially disk-shaped member including an annular yoke and teeth having a substantially T shape in plan view which project inward from an inner circumferential surface of the yoke (see Figs. 3 and 4). As a material of the metal piece 2, an electrical steel sheet can be employed.

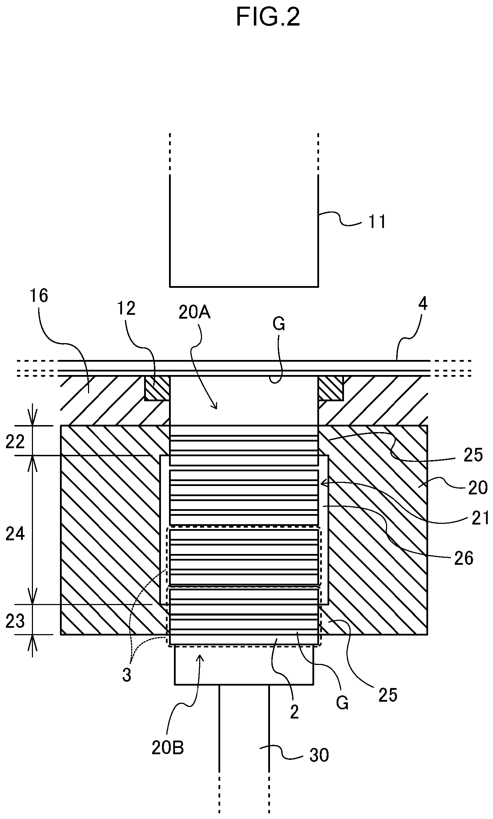

An adhesive G (see Fig. 2) may be applied in advance to a part or the entire surface of at least one surface (specifically, an upper surface and/or a lower surface) of some of the metal pieces 2 described above. As the adhesive G applied to the metal pieces 2, various adhesives can be employed, and for example, an anaerobic adhesive, a moisture-curing adhesive, a thermosetting adhesive, an ultraviolet-curable adhesive, a two-liquid mixed curing adhesive, or the like can be used. In a case in which the thermosetting adhesive or the ultraviolet-curable adhesive is used, a heat source or a light source may be disposed around an upper end portion 20A of the squeezer 20. In the embodiment, the anaerobic adhesive is employed as the adhesive G. The adhesive G need not be applied to the metal pieces 2 included in an end portion of the layered body 3 among the metal pieces 2 supplied to the squeezer 20.

The punch 11 is disposed above the sheet-shaped metal 4 conveyed in the left-right direction, and can include a substantially columnar or substantially cylindrical member capable of punching out the metal pieces 2 having a predetermined shape by moving up and down toward the die 12. The punch 11 may have a proximal end portion fixed to an upper mold 13. The upper mold 13 may be connected to a slide 14 movable in the up-down direction, and the punch 11 may be movable in the up-down direction by operating the slide 14.

Around the punch 11, a stripper 15 for removing the sheet-shaped metal 4 bitten by the punch 11 when the punch 11 is lowered to punch the sheet-shaped metal 4 may be provided. The stripper 15 may be attached to the slide 14 to move up and down together with the punch 11, and may be brought into close contact with an upper surface of the sheet-shaped metal 4 to support the sheet-shaped metal 4 at the time of a state in which a distal end of the punch 11 is inserted into the die 12. A drive source (not illustrated) such as a motor-driven crank mechanism may be connected to the slide 14.

Fig. 1 shows only the punch 11 that punches out the metal pieces 2 from the sheet-shaped metal 4, but the number of punches 11 is not limited to one. Specifically, one or more other punches that perform preliminary punching for the punching out of the metal piece 2 by the punch 11 may be disposed on a side upstream of a position where the punch 11 is disposed in a conveying direction of the sheet-shaped metal 4. The other punches may be fixed to the upper mold 13 similarly to the punch 11, and may move up and down together with the punch 11.

The die 12 can be disposed to be opposite to the punch 11 with the sheet-shaped metal 4 interposed therebetween, and can be made of an annular member having a hole into which the distal end portion of the lowered punch 11 can be inserted. The die 12 mainly has a function of pressing the metal pieces 2 to be punched out. The die 12 may be fixed to a lower mold 16. The lower mold 16 may be connected to a bolster 17. The number and arrangement of the dies 12 may be adjusted depending on the number and arrangement of the punches 11. The bolster 17 may be fixed to a housing (not illustrated) or the like of the punching mechanism 10, and the movement thereof may be restricted.

Fig. 2 is an enlarged view showing a part of the squeezer of the layered body manufacturing apparatus of Fig. 1 in an enlarged manner. Fig. 3 is a cross-sectional view taken along line A-A in Fig. 1. Fig. 4 is a cross-sectional view taken along line B-B in Fig. 1. Also in Fig. 2, similarly to Fig. 1, the squeezer 20 and a part of the die 12 are mainly illustrated on a cross section. In Fig. 2, a gap is shown between the layered body 3 and the squeezer, and a layer of the adhesive G is shown between bonding surfaces of the metal pieces 2 so that it is easy to understand that the metal pieces 2 conveyed in the squeezer 20 constitute a plurality of layered bodies 3. However, it should be noted that such a gap is not formed between the metal pieces 2 actually conveyed in the squeezer 20, and the layer of the adhesive G is also usually sufficiently thinner than that shown in the drawing.

In addition, in Figs. 1 and 2, the number of metal pieces 2 conveyed in the squeezer 20 is relatively small for easy understanding, but the number of metal pieces 2 conveyed in the squeezer 20 may be several tens to several hundreds. The total number of metal pieces 2 constituting the layered body 3 may also be several tens to several hundreds. As a result, about two to five (bonded or in a process of bonding) layered bodies 3 are often conveyed in the squeezer 20.

As illustrated in Figs. 2 to 4, the squeezer 20 has a conveyance passage in which the metal pieces 2 punched out by the punching mechanism 10 and pushed downward out of the die 12 are sequentially layered and conveyed downward. The squeezer 20 can be made of an annular member, more specifically, a substantially cylindrical member having a predetermined length in the up-down direction, which has a through-hole 21 in a central portion thereof and may be attached to the bolster 17 in a state in which one end of the squeezer is connected to the die 12. The through-hole 21 can function as an example of the conveyance passage in which the metal pieces 2 are conveyed from an upper side to a lower side while being layered. In the embodiment, a case in which a substantially cylindrical member is employed as a squeezer 20 is exemplified, but the shape of the squeezer 20 can be changed depending on a shape or the like of the metal piece 2 to be conveyed, if appropriate. For example, the squeezer 20 may have a cylindrical shape by combining arc-shaped members in a circumferential direction.

As illustrated in Fig. 2, the squeezer 20 includes three different regions in the conveying direction (that is, the up-down direction) of the metal pieces 2. Specifically, a first side pressure application region 22 formed on the upper end portion 20A side, a second side pressure application region 23 formed on a lower end portion 20B side, and a middle region 24 formed in the middle of the squeezer 20 in the conveying direction are included.

As illustrated in Figs. 2 and 3, the first side pressure application region 22 is positioned at the upper end portion 20A positioned on a side upstream in the conveying direction of the metal pieces 2, and pressurizes and supports a side surface of the metal piece 2 supplied from the punching mechanism 10 with a predetermined pressure. An inner circumferential surface of the first side pressure application region may have a close-contact portion 25 for applying a side pressure to the metal pieces 2 by being brought into close contact with at least a part of a lateral perimeter of the metal piece 2 to be conveyed. In the embodiment, the close-contact portion 25 may be formed on an entire circumference of an inner circumferential surface of the first side pressure application region 22, and an inner diameter of the close-contact portion 25 may be set to be slightly smaller than an outer diameter of the metal piece 2. This causes the metal piece 2 pushed into the first side pressure application region 22 from the upper end portion 20A by the punch 11 to be brought into close contact with and supported by the close-contact portion 25. In the embodiment, an example is described in which the close-contact portion 25 is formed on the entire circumference of the inner circumferential surface of the first side pressure application region 22, so that the side pressure is applied to an entire circumference of the side surface of the metal piece 2 passing in the close-contact portion 25. However, a shape of the close-contact portion 25 is not limited thereto. Specifically, the close-contact portion 25 may be formed to hold an edge portion of the metal piece 2, and the side pressure may be applied only to a part of the side surface of the metal piece 2.

The second side pressure application region 23 is positioned at the lower end portion 20B positioned on a side downstream in the conveying direction and pressurizes and supports, with a predetermined pressure, the side surface of the metal piece 2 conveyed in the squeezer 20. Similarly to the first side pressure application region 22 described above, the second side pressure application region 23 may have a close-contact portion 25 on an inner circumferential surface thereof. The close-contact portion 25 of the second side pressure application region 23 can apply a side pressure to a lateral perimeter (in other words, an outer circumferential surface) of the metal piece 2 passing in the second side pressure application region 23, and the metal piece 2 is supported by the second side pressure application region 23 due to the side pressure. The second side pressure application region 23 can be referred to as a region for supporting, for a certain period of time, the layered body 3 to which the plurality of metal pieces 2 are bonded.

As shown in Figs. 2 and 4, the middle region 24 is positioned between the first side pressure application region 22 and the second side pressure application region 23 in the conveying direction of the metal pieces 2 and has a gap 26 between the middle region and the metal pieces 2 conveyed in the squeezer 20. As shown in Fig. 4, since an inner circumference of the middle region 24 and the metal pieces 2 passing in the middle region 24 are separated with the gap 26 interposed therebetween, no side pressure is applied to the metal pieces 2 passing in the middle region 24. When a length of the gap 26 in a radial direction thereof is set to be as small as several micrometers to tens of micrometers, this is preferable because large misalignment of the metal pieces 2 conveyed in the middle region 24, particularly, the metal pieces 2 in a process of being bonded in a horizontal direction, can be reduced.

Both the first and second side pressure application regions 22 and 23 may be adjusted to have a length of about 5 to 10% with respect to an entire length of the squeezer 20 in the up-down direction. As described above, when the lengths of the first and second side pressure application regions 22 in the up-down direction are adjusted to be relatively small with respect to a length of the middle region 24 in the up-down direction, the side pressures applied in the first and second side pressure application regions 22 and 23 are larger than those in a case in which a side pressure is applied from the entire squeezer 20.

The layered body manufacturing apparatus 1 according to the embodiment can include a back pressure device 30 in addition to the above-described configuration in order to mainly promote bonding between the metal pieces 2 layered in the squeezer 20. The back pressure device 30 may support the metal pieces 2 conveyed in the squeezer 20 to pressurize the metal pieces from a side downstream in the conveying direction toward a side upstream in the conveying direction. In other words, a back pressure may be applied to the plurality of metal pieces 2 punched by the punching mechanism 10 and pushed into the squeezer 20 from a side opposite to a position at which the punch 11 is provided, that is, from a side on which the lower end portion 20B is positioned.

The back pressure device 30 described above may include at least a pad 31 that is brought into close contact with the most downstream metal piece 2 in the conveying direction among the metal pieces 2 conveyed along the squeezer 20, and a support arm 32 that applies a pressing force to the pad 31 in a direction opposite to the conveying direction. The support arm 32 may be connected to a drive mechanism capable of conveying one layered body 3 unloaded out of the squeezer 20 to any position. The back pressure device 30 may constantly apply a pressing force to the metal pieces 2 conveyed in the squeezer 20 toward the side upstream in the conveying direction except for the timing of conveying the layered body 3 to any position. The pressing force can be applied by, for example, an elastic member (for example, a gas spring) connected to the support arm 32.

The back pressure device 30 applies the pressing force to the metal pieces 2 conveyed in the squeezer 20 toward the side upstream in the conveying direction. This causes the pressing force in the layering direction to act on the layered metal pieces 2, thereby enabling the bonding between the metal pieces 2 to be stably promoted even when a pressing force from the punch 11 is not applied.

In order to control the individual configurational elements described above, the manufacturing apparatus 1 according to the embodiment can further include a control unit CU. The control unit CU may be communicably connected to, via wired or wireless communication, the individual configurational elements of the layered body manufacturing apparatus 1 or a driver or the like that operates the configurational elements. As the control unit CU, a known computer including a sequencer (a programmable logic controller, PLC) can be employed. The known computer may include at least a processor, volatile and non-volatile memories, and various interfaces.

According to the layered body manufacturing apparatus 1 of the embodiment, by having the above-described configuration, it is possible to sufficiently secure the load in the layering direction when the metal pieces 2 are bonded to each other. Specifically, since conventional apparatuses have a structure in which a side pressure is applied to all of the metal pieces conveyed in the squeezer, a load in a layering direction from a punch or a back pressure device is distributed and applied to all of the metal pieces. On the other hand, in the layered body manufacturing apparatus 1 according to the embodiment, the middle region 24 that does not apply the side pressure to the metal pieces 2 is provided in the squeezer 20, thereby preventing a frictional force from being generated in the layering direction in the middle region 24, and as a result, causing the load in the layering to be uniformly applied to the metal pieces 2 passing in the middle region 24. At this time, since the load in the layering direction uniformly applied to the metal pieces 2 is not distributed due to the application of the side pressure, the load in the layering direction is larger than a load obtained by a conventional structure, and the load in the layering direction optimal for the bonding of the metal pieces 2 can be easily secured. In addition, since a relatively large load in the layering direction can be applied, the metal pieces 2 can be brought into closer contact with each other while correcting the warpage generated during press processing.

Since the side pressure is applied to the metal pieces 2 conveyed to positions closer to the upper end portion 20A and the lower end portion 20B of the squeezer 20 by the first and second side pressure application regions 22 and 23, all of the metal pieces 2 conveyed in the squeezer 20 can be stably held in the squeezer 20.

In the back pressure device 30, when the pressing force (specifically, the back pressure) is increased, the pressing force in the layering direction with respect to the metal pieces 2 can be increased, and the bonding between the metal pieces 2 can be stably performed. On the other hand, if the pressing force of the back pressure device 30 becomes too strong, the pressing force may exceed the frictional force produced due to the side pressure applied to the metal pieces 2 at a timing when the punch 11 is lifted, and the metal pieces 2 in the squeezer 20 may be pushed up in a direction opposite to the conveying direction. When such pushing-up occurs, it is necessary to stop the manufacturing apparatus 1 for maintenance, and a manufacturing yield can be reduced. However, in the layered body manufacturing apparatus 1 according to the embodiment, since the side pressure is not applied to the metal pieces 2 conveyed in the middle region 24, the pressure in the layering direction applied to this part is larger than that in the conventional case. Therefore, the pressing force necessary for bonding the metal pieces 2 can be secured without increasing the pressing force itself of the back pressure device 30. In addition, in a case where the anaerobic adhesive is used as the adhesive G, the load on the metal pieces 2 in the layering direction can be increased as described above, so that the metal pieces 2 can be brought into closer contact with each other to reliably block the air, and a reaction of the adhesive G can be promoted.

### <Method for Manufacturing Layered Body>

Next, a method for manufacturing a layered body according to the embodiment will be described. In the following description, the case of manufacturing a layered body by using the above-described layered body manufacturing apparatus 1 will be described, but the method for manufacturing a layered body of the disclosure can be implemented by an apparatus other than the manufacturing apparatus 1. However, a structure of a squeezer used in the method for manufacturing a layered body according to the present embodiment is the same as the squeezer 20 in the layered body manufacturing apparatus 1 described above. That is, it is assumed that the first side pressure application region 22 which is positioned at the end portion on the side upstream in the conveying direction and pressurizes and supports, with the predetermined pressure, the side surface of the metal pieces 2, the second side pressure application region 23 which is positioned at the end portion on the side downstream in the conveying direction and pressurizes and supports, with the predetermined pressure, the side surface of the metal pieces 2 conveyed in the squeezer, and the middle region 24 which is positioned between the first side pressure application region 22 and the second side pressure application region 23 in the conveying direction and has the gap 26 between the middle region and the metal pieces 2 conveyed in the squeezer 20. The following descriptions of effects and the like also serve as descriptions of effects of the manufacturing apparatus 1 according to the embodiment.

The method for manufacturing a layered body described below can be performed by operating various configurational elements of the layered body manufacturing apparatus 1 based on, for example, a predetermined instruction from a computer included in the control unit CU of the layered body manufacturing apparatus 1. Hence, the method for manufacturing a layered body according to the embodiment can be provided in a form of a program such as software including a command to cause a processor of a computer included in the control unit CU described above to execute predetermined operation, in a form of a non-transitory recording medium storing the program, or in a form of an application program provided via a network or the like.

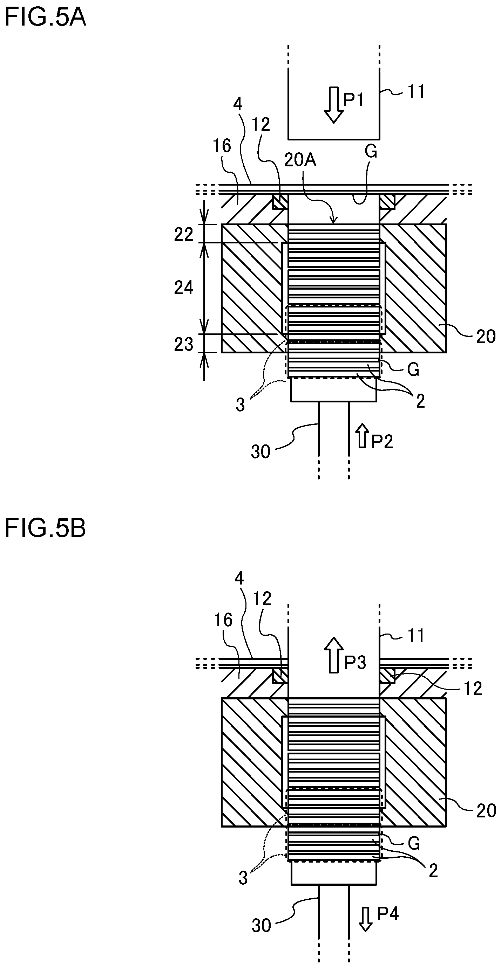

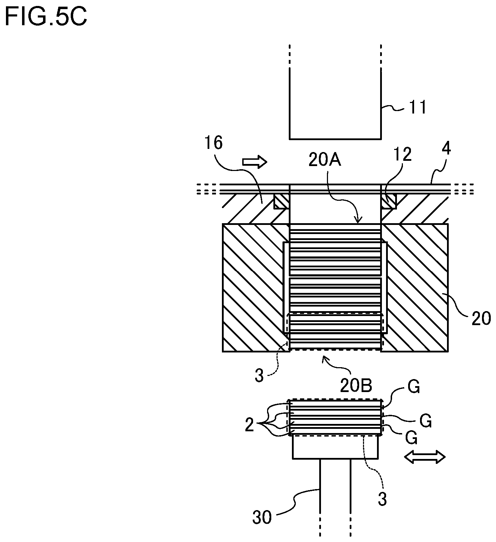

Figs. 5A to 5C are illustrative views of operation in a case in which an example of the method for manufacturing a layered body according to the other embodiment of the disclosure is implemented. In Fig. 5, as the layered body 3 to be manufactured, a layered body in which four metal pieces 2 are layered is exemplified, but the number of metal pieces 2 included in one layered body 3 is not particularly limited. In the method for manufacturing a layered body according to the embodiment, first, the metal pieces 2 are sequentially supplied to the upper end portion 20A of the squeezer 20.

When a step of supplying the metal pieces 2 described above is described in detail, first, the sheet-shaped metal 4 wound around a bobbin or the like (not illustrated) is conveyed between the upper mold 13 and the lower mold 16 of the punching mechanism 10 by using conveying means (not illustrated). At this time, the adhesive G, for example, the anaerobic adhesive, may be at least partially applied in advance to an appropriate position of one surface, for example, the lower surface, of the sheet-shaped metal 4.

Next, as shown in Fig. 5A, the slide 14 is operated toward the sheet-shaped metal 4 placed on the lower mold 16 and the die 12, and the upper mold 13 and the punch 11 are lowered in a direction of an arrow P1. This causes the metal pieces 2 to be punched out from the sheet-shaped metal 4 by the punch 11 and the die 12. Before punching is performed by the punch 11 and the die 12, a hole punching step for forming a central hole or the like of the metal piece 2 in the sheet-shaped metal 4 by using another punch and another die may be performed.

The punched metal piece 2 is pushed downward from the upper end portion 20A side into the through-hole 21 of the squeezer 20 via the through-holes of the die 12 and the lower mold 16 by lowering of the punch 11. The side pressure is applied to the metal pieces 2 pushed into the squeezer 20 when outer perimeters of the metal pieces are brought into close contact with the close-contact portion 25 of the first side pressure application region 22, and the metal pieces 2 are supported in the squeezer 20 even after the punch 11 is lifted as shown in Fig. 5B.

The supplying of the metal pieces 2 by the step described above can be carried out continuously. At this time, the back pressure device 30 may apply the back pressure in a direction of an arrow P2 to the plurality of metal pieces 2 already supplied into the squeezer 20. The back pressure from the back pressure device 30 is sufficiently smaller than the pressure applied at the time of pushing the metal pieces 2 by the punch 11.

When the metal pieces 2 are supplied to the upper end portion 20A of the squeezer 20, then, the supplied metal pieces 2 are conveyed in the conveying direction while being layered and bonded in the squeezer 20. The bonding and the conveyance of the metal pieces 2 in the conveying direction are automatically performed as the new metal piece 2 is supplied from the upper end portion 20A of the squeezer 20 by lowering the punch 11. Specifically, the metal piece 2 pushed into the squeezer 20 is layered on an upper portion of the metal piece 2 pushed previously, and the metal pieces 2 are brought into airtight contact with each other, thereby causing an adhesion reaction of the anaerobic adhesive G to proceed. Whenever the new metal piece 2 is pushed into the upper end portion 20A of the squeezer 20, the metal pieces 2 already held in the squeezer 20 are pressed by the pushed metal piece 2 and are conveyed downward in the squeezer 20 by a thickness of the pushed metal piece.

As described above, the plurality of metal pieces 2 conveyed in the squeezer 20 are constantly pressed by the back pressure device 30, and this causes the metal pieces 2 to be brought into closer contact with each other, and causes the adhesion reaction of the anaerobic adhesive G to be favorably promoted. In particular, since a large load in the layering direction is substantially uniformly applied to the metal pieces 2 passing in the middle region 24 of the squeezer 20, the air can be reliably blocked from the adhesive G, and the bonding of the metal pieces 2 to each other can be reliably completed while the metal pieces 2 are conveyed in the squeezer 20. Since the side pressure is applied to the metal pieces 2 conveyed in the squeezer 20 in the first and second side pressure application regions 22 and 23, the metal pieces 2 are stably held in the squeezer 20 regardless of the application of the back pressure by the back pressure device 30.

When the conveyance of the metal pieces 2 described above proceeds, as shown in Fig. 5B, the layered body 3 in which the plurality of metal pieces 2 are bonded is unloaded from the lower end portion 20B of the squeezer 20. In this case, as shown in Fig. 5C, the unloaded layered body 3 can be conveyed to another device or a conveyor for conveying the layered body 3 to still another device by operating the back pressure device 30. Although no back pressure is applied to the plurality of metal pieces 2 conveyed in the squeezer 20 at the timing when the back pressure device 30 conveys one layered body 3 unloaded from the squeezer 20, the metal pieces 2 may be continuously supplied by the punching mechanism 10. In this case, the layered body 3 conveyed most downstream in the conveying direction is held in the squeezer 20 by the side pressure in the second side pressure application region 23 at least for a period until the back pressure device 30 returns.

As described above, according to the method for manufacturing a layered body according to the embodiment, the load can be reliably applied in the layering direction of the metal pieces 2 during curing of the adhesive G in the squeezer 20. As a result, the metal pieces 2 can be brought into closer contact with each other by the high load while warpage of the metal pieces 2 produced when the metal pieces 2 are punched out is corrected, and the metal pieces 2 can be reliably bonded. In a case where the anaerobic adhesive is used as the adhesive G, the metal pieces 2 can be brought into closer contact with each other to reliably block the air, and a reaction of the adhesive G can be promoted.

### <Modification Example>

In the layered body manufacturing apparatus 1 according to the embodiment described above, so-called in-mold layering in which the metal pieces 2 are layered in the apparatus including the upper mold 13 and the lower mold 16 has been described. However, the disclosure can be similarly applied to so-called out-of-mold layering in which a device that punches out the metal pieces 2 and a device that layers the metal pieces 2 are separately provided. Therefore, in the following description, as a modification example of the embodiment described above, a layered body manufacturing apparatus 1A and a method for manufacturing a layered body will be described by the out-of-mold layering.

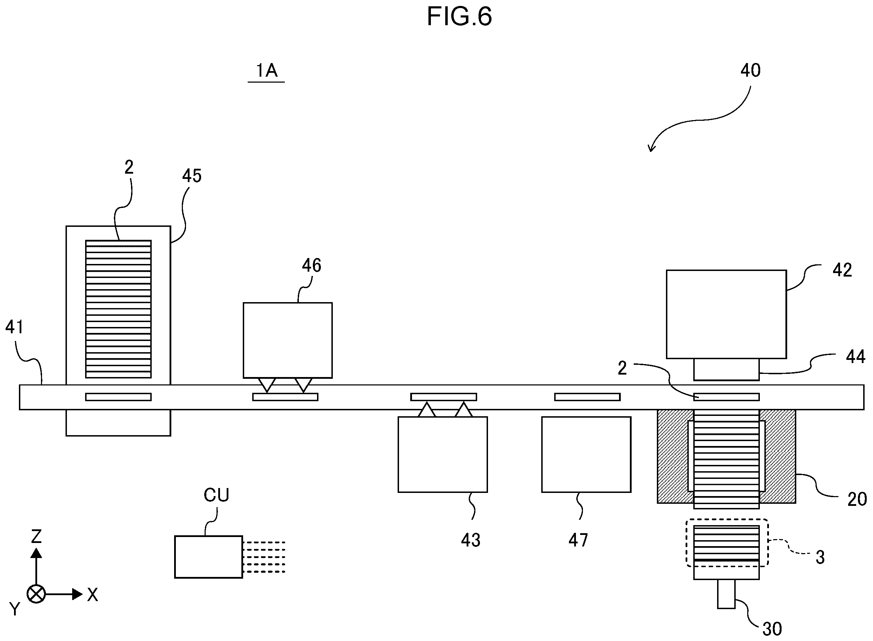

Fig. 6 is a schematic illustrative view showing an example of a layered body manufacturing apparatus according to the modification example of the disclosure. The layered body manufacturing apparatus 1A according to the modification example may have the same configuration as that of the layered body manufacturing apparatus 1 according to the above-described embodiment except that, instead of the punching mechanism 10, a metal piece supply device 40 is employed as a supply mechanism for the metal pieces 2. Accordingly, in the following description, parts having the same configuration as that of the layered body manufacturing apparatus 1 according to one embodiment will be denoted by the same reference numerals as those used for the description of the one embodiment, and the description thereof will be omitted, and a configuration different from those of the layered body manufacturing apparatus 1 according to the one embodiment will be mainly described.

As shown in Fig. 6, the layered body manufacturing apparatus 1A according to the modification example includes the squeezer 20 and the metal piece supply device 40 as an example of a supply mechanism. Of the devices, the squeezer 20 may be the same as that of the layered body manufacturing apparatus 1 according to the embodiment described above, and the back pressure device 30 may be provided on the side downstream in the conveying direction.

The metal piece supply device 40 is configured to supply the metal pieces 2 to the squeezer 20 and includes a metal piece conveyance passage 41 in which at least the metal pieces 2 are conveyed, a press machine 42 which pushes the metal pieces 2 conveyed in the metal piece conveyance passage 41 to the upper end portion 20A of the squeezer 20, and an adhesive applying device 43 which applies the adhesive G to a part of at least one surface of at least some of the metal pieces 2 conveyed in the metal piece conveyance passage 41.

The metal piece conveyance passage 41 may be configured to sequentially convey, to the press machine 42, the metal pieces 2, for example, the metal pieces 2 punched into any shape in advance. The metal piece conveyance passage 41 can be configured of known conveyance means such as a conveyor. A metal piece loading device 45 that sequentially supplies the metal pieces 2 onto the metal piece conveyance passage 41 may be provided on a side upstream of the metal piece conveyance passage 41, the press machine 42 may be provided on a side downstream of the metal piece conveyance passage 41, and the adhesive applying device 43 may be provided between the metal piece loading device 45 and the press machine 42 on the metal piece conveyance passage 41.

The press machine 42 may be configured to sequentially push the metal pieces 2 conveyed on the metal piece conveyance passage 41 into the upper end portion 20A of the squeezer 20. The press machine 42 may include a ram 44, and sequentially supply the metal pieces 2 to the squeezer 20 by operating the ram 44 in a direction (for example, the Z direction in Fig. 6) intersecting the conveying direction (for example, the X direction in Fig. 6) on the metal piece conveyance passage 41.

The adhesive applying device 43 may apply the adhesive G for bonding the metal pieces 2 to each other to at least one surface, for example, a back surface, of each of the metal pieces 2 conveyed on the metal piece conveyance passage 41. The adhesive G to be applied here may be, for example, an anaerobic adhesive. The adhesive applying device 43 need not apply the adhesive G to a part of the metal piece 2 conveyed on the metal piece conveyance passage 41, specifically, the metal piece 2 positioned on the lowermost side when the metal pieces 2 are bonded to each other and form the layered body 3.

The metal piece supply device 40 having the above-described configuration may further include a curing agent applying device 46 that applies a curing agent to the metal piece 2 at a middle position on the metal piece conveyance passage 41. The curing agent applying device 46 may apply a curing agent (sometimes referred to as a primer) that accelerates the adhesion reaction of the adhesive G by causing the anaerobic adhesive G to come into contact with one surface, for example, a front surface, of the metal piece 2 conveyed on the metal piece conveyance passage 41. The surface to which the curing agent is applied by the curing agent applying device 46 may be the same surface as the surface to which the adhesive G is applied by the adhesive applying device 43. However, in this case, an application position may be adjusted so that the curing agent and the adhesive G do not come into contact with each other while the metal piece 2 is conveyed on the metal piece conveyance passage 41.

The metal piece supply device 40 having the configuration described above may further include an inspection device 47 that inspects an application state of the adhesive G by the adhesive applying device 43. The inspection device 47 may be disposed on a side downstream of the adhesive applying device 43 in the conveying direction on the metal piece conveyance passage 41, and may directly inspect an application surface of the adhesive G by using various sensors or imaging means. The inspection device 47 can also inspect the application state of the curing agent, in addition to the inspection of the application state of the adhesive G. In this case, the inspection device 47 may also be provided on the upper surface side of the metal piece 2 conveyed on the metal piece conveyance passage 41.

By using the metal piece supply device 40 having the configuration described above, the layered body manufacturing apparatus 1A according to the modification example can also be applied to so-called out-of-mold layering in which the layered body 3 is manufactured from the metal pieces 2 punched into a predetermined shape in advance. It is also possible to provide a method for manufacturing a layered body using the layered body manufacturing apparatus 1A. The method for manufacturing a layered body can be realized by causing the control unit CU in the layered body manufacturing apparatus 1A to operate various elements of the layered body manufacturing apparatus 1A.

The method for manufacturing a layered body in the case of the out-of-mold layering described above may be the same as the method for manufacturing a layered body according to the embodiment described above except for a step of supplying the metal pieces 2 to the upper end portion 20A of the squeezer 20. The step of supplying the metal pieces 2 can include a step of sequentially supplying the metal pieces 2 from the metal piece loading device 45 onto the metal piece conveyance passage 41, a step of applying the adhesive G and the curing agent to the metal piece on the metal piece conveyance passage 41 by using the adhesive applying device 43 and the curing agent applying device 46, a step of inspecting the application state of the adhesive G and the curing agent on the metal piece 2 by using the inspection device, and a step of sequentially pushing the metal pieces 2 on the metal piece conveyance passage 41 into the upper end portion 20A of the squeezer 20 by using the press machine 42.

Also in the layered body manufacturing apparatus 1A and the method for manufacturing a layered body according to the modification example, the same effects as those of the layered body manufacturing apparatus and the method for manufacturing a layered body according to the embodiment can be obtained. That is, when the adhesive G is cured in the squeezer 20, the load necessary for the bonding can be reliably applied in the layering direction of the metal piece 2. As a result, it is possible to bring the metal pieces 2 into closer contact with each other by the high load while the warpage of the metal pieces 2 is corrected. Hence, even if a layer of the adhesive G is thin, the metal pieces 2 can be reliably bonded to each other.

The disclosure is not limited to the embodiments described above, and various modifications thereof can be made and implemented without departing from the gist of the disclosure. These modifications are all included in the technical ideas of the disclosure.

All documents including publications, patent applications, and patents cited in this specification are herein incorporated by reference to the same extent that each document is individually and specifically described to be incorporated by reference and all of the contents thereof are described herein.

Nouns and similar demonstratives used in connection with the descriptions of the disclosure (particularly in connection with the following claims) are to be construed to mean the singular and the plural forms thereof, unless otherwise noted in this specification or clearly contradicted by context. The terms "comprising", "having", and "including" and "containing" are to be construed as open-ended terms (that is, meaning that "including but not limited to") unless otherwise noted. The detailed descriptions of the numerical ranges in this specification are merely intended to serve as shorthand notation for referring to individual values falling within the ranges, unless otherwise noted in this specification, and the individual values are incorporated in this specification as the values are individually recited in this specification. All the methods described in this specification can be performed in any suitable order unless otherwise noted in this specification or clearly contradicted by context. Any examples or exemplary words (for example, "such as") used in this specification are merely intended to describe the disclosure better and do not pose a limitation on the scope of the disclosure unless otherwise claimed. No words in the specification should be construed as indicating any element not described in the claims as essential to implementation of the disclosure.

Preferred embodiments of the disclosure are described in this specification, including the best aspect known to the inventor for implementing the disclosure. Modifications of these preferred embodiments will become apparent to those skilled in the art upon reading the above descriptions. The inventor expects that a person of skill will apply such modifications, if appropriate, and anticipates the disclosure to be implemented by a method other than the method specifically described in this specification. Hence, the disclosure includes all amendments of and equivalents to the contents of the claims appended to this specification as permitted by applicable law. Any combination of the above-described elements in all the modifications thereof is included in the disclosure unless otherwise noted in this specification or clearly contradicted by context.

## Claims

1. A layered body manufacturing apparatus, comprising:
a supply mechanism that supplies sheet-shaped metal pieces, including a sheet-shaped metal piece having a part of at least one surface to which an adhesive is applied; and
a squeezer having a conveyance passage in which the metal pieces supplied from the supply mechanism are sequentially layered and conveyed, wherein the squeezer includes:
a first side pressure application region that is positioned at an end portion at a side upstream in a conveying direction of the metal pieces and that pressurizes and supports, with a predetermined pressure, at least a part of a side surface of each of the metal pieces supplied from the supply mechanism,
a second side pressure application region that is positioned at an end portion at a side downstream in the conveying direction and that pressurizes and supports, with a predetermined pressure, the at least a part of a side surface of each of the metal pieces conveyed in the squeezer, and
a middle region that is positioned between the first side pressure application region and the second side pressure application region in the conveying direction and that has a gap between the middle region and the metal pieces conveyed in the squeezer.

2. The layered body manufacturing apparatus according to claim 1, further comprising:
a back pressure device that supports the metal pieces conveyed in the conveyance passage to pressurize the metal pieces from the side downstream in the conveying direction toward the side upstream in the conveying direction.

3. The layered body manufacturing apparatus according to claim 1 or 2, wherein:
the supply mechanism includes a punching mechanism having a punch and a die which punch out the metal pieces, having a predetermined shape, from strip-shaped sheets, and
the die is connected to an end portion of the squeezer at the side upstream in the conveying direction.

4. The layered body manufacturing apparatus according to claim 1 or 2, wherein the supply mechanism includes:
a metal piece conveyance passage in which the metal pieces are conveyed,
a press machine that pushes the metal pieces conveyed in the metal piece conveyance passage to an end portion of the squeezer at the side upstream in the conveying direction, and
an adhesive applying device that applies an adhesive to a part of at least one surface of at least some of the metal pieces conveyed in the metal piece conveyance passage.

5. A method for manufacturing a layered body, comprising:
a step of supplying sheet-shaped metal pieces including, a sheet-shaped metal piece having a part of at least one surface to which an adhesive is applied, to an end portion at a side upstream in a conveying direction of the metal pieces in a squeezer including a conveyance passage in which the metal pieces are sequentially layered and conveyed, the squeezer including a first side pressure application region that is positioned at an end portion at a side upstream in the conveying direction and that pressurizes and supports, with a predetermined pressure, at least a part of a side surface of each of the metal pieces, a second side pressure application region that is positioned at an end portion at a side downstream in the conveying direction and that pressurizes and supports, with a predetermined pressure, the at least a part of a side surface of each of the metal pieces conveyed in the squeezer, and a middle region that is positioned between the first side pressure application region and the second side pressure application region in the conveying direction and that has a gap between the middle region and the metal pieces conveyed in the squeezer;
a step of layering and bonding the metal pieces in the conveyance passage and conveying the metal pieces in the conveying direction; and
a step of unloading, from an end portion of the squeezer at the side downstream in the conveying direction, a layered body in which a plurality of the metal pieces are bonded.
